# DEMANDE DE BREVET EUROPEEN

(11) **EP 0 994 053 A1**
(43) Date de publication de la demande: **19.04.2000**
(21) Numéro de dépôt: 99410118.6
(22) Date de dépôt: 28.09.1999
(51) Int. Cl.: B65H 18/04, B65H 18/06, F16C 13/04

(54) **Dispositif enrouleur et dérouleur d'ensouple à palier de verrouillage**

(30) Priorité: 16.10.1998 FR 9813167
(71) Demandeur: Machines Coopelin SA, 38300 Maubec (FR)
(72) Inventeur: Jennet, Michel, 38090 Vaulx Milieu (FR)
(74) Mandataire: Hecké, Gérard

(57) **Abrégé**

Un dispositif enrouleur et dérouleur d'ensouple (10) comporte un tambour cylindrique creux entraîné en rotation par deux galets d'entraînement (24,26) prenant appui tangentiellement sur la surface extérieure de l'ensouple (10) en deux points disposés à la partie inférieure symétriquement par rapport au plan vertical médian. Un galet de verrouillage (32) est porté par un bras d'actionnement pivotant autour d'un axe entre une position relevée de déblocage, située à l'extérieur de l'ensouple (10), et une position abaissée de blocage provoquant la venue en engagement du galet de verrouillage (32) contre une zone de la paroi intérieure de l'enveloppe (10) ménagée entre les deux galets d'entraînement (24,26). Un verrou et un vérin pneumatique coopèrent avec le bras d'actionnement pour inhiber le déplacement du galet de verrouillage (32) vers la position relevée de déblocage lors de la rotation de l'ensouple (10).

## Description

### Domaine technique de l'invention

L'invention est relative à un dispositif enrouleur et dérouleur d'ensouple, notamment pour la teinture de roules dans l'industrie textile, et comprenant :
- un tambour cylindrique creux monté à rotation dans deux paliers d'extrémités, et ayant une surface latérale percée par une pluralité d'orifices pour le passage d'un liquide de teinture,
- et des moyens de positionnement radial et d'entraînement en rotation de l'ensouple au niveau de chaque palier.

### Etat de la technique

Les ensouples sont constituées d'une manière classique par des mandrins d'enroulage et de déroulage de tissu, utilisés dans l'industrie textile pour la teinture de bobines de tissu appelées "roules". Le mandrin est formé par un tambour ou rouleau cylindrique creux ayant une surface latérale perforée, et deux fonds ouverts. L'opération de teinture dans la masse du tissu enroulé s'effectue suite au passage radial du liquide de teinture dans les orifices du tambour, soit de l'intérieur vers l'extérieur, soit dans le sens opposé. Le tambour métallique d'un mandrin présente un diamètre important (de l'ordre de 400 à 500 mm), et lors du stockage des bobines de tissu mouillé, le liquide migre vers le bas en créant un balourd pouvant atteindre un poids de plusieurs centaines de kilogrammes.

Les extrémités opposées du tambour comportent des bagues annulaires coaxiales agencées pour s'adapter à un raccordement étanche de l'ensouple dans le circuit de la machine de teinture. L'installation dans un poste de bobinage ou débobinage est difficile, car les extrémités de l'ensouple sont généralement dépourvues de moyens de prises faciles pour assurer le centrage, puis l'entraînement ou le freinage de la roule.

Les dispositifs de fixation connus à ce jour comportent un jeu de trois galets de blocage, disposés extérieurement à chaque extrémité de l'ensouple avec un décalage angulaire de 120° pour assurer une immobilisation radiale centrée de l'ensouple. Le serrage des galets permet l'entraînement en rotation ou le freinage de l'ensouple. Les opérations d'introduction ou de dégagement de l'ensouple sont difficiles à mettre en oeuvre. D'autre part, la présence d'un gros faux-rond aux extrémités de l'ensouple peut être dangereux pour la mécanique.

Dans certaines applications, il est nécessaire que l'enroulage de la roule s'effectue au moyen d'un cylindre de contre-pression prenant appui tangentiellement sur le tissu. Etant donné l'encombrement important des paliers à trois galets de blocage, le cylindre de contre-pression n'a pas la place suffisante pour passer entre les galets supérieurs au début de l'enroulage, lorsque le diamètre de la roule est faible.

Pour pallier cet inconvénient, certains utilisateurs font usage de tourillons rapportés solidaires de plateaux de serrage coniques, et serrés par de grosses tiges filetées traversantes. Une telle solution est parfois inapplicable en cas de forts balourds.

### Objet de l'invention

Le but de l'invention consiste à faciliter les manoeuvres d'introduction et d'extraction d'une ensouple dans un poste d'enroulage et de déroulage, avec un encombrement réduit et une sécurité optimum pour les opérateurs.

Selon l'invention, chaque palier comporte :
- deux galets d'entraînement solidaires d'un châssis fixe, et prenant appui tangentiellement sur la surface extérieure de l'ensouple en deux points disposés à la partie inférieure, symétriquement par rapport au plan vertical médian,
- un galet de verrouillage porté par un bras d'actionnement pivotant autour d'un axe entre une position relevée de déblocage située à l'extérieur de l'ensouple, et une position abaissée de blocage provoquant la venue en engagement du galet de verrouillage contre une zone de la paroi intérieure de l'enveloppe, ménagée entre les deux galets d'entraînement,
- et des moyens de retenue associés au bras d'actionnement pour inhiber le déplacement du galet de verrouillage vers la position relevée de déblocage lors de la rotation de l'ensouple.

Selon un mode de réalisation préférentiel, les moyens de retenue comportent un verrou ayant un levier de manoeuvre associé au bras d'actionnement, et comprenant un crochet d'accrochage destiné à s'enclencher sur des moyens de butée dans ladite position de blocage du galet de verrouillage. Un vérin coopère avec le bras d'actionnement pour verrouiller positivement le crochet d'accrochage sur les moyens de butée, et le galet de verrouillage en position de blocage contre la face intérieure de l'ensouple.

Selon une caractéristique de l'invention, les organes de sécurité comportent un premier interrupteur de fin de course détectant la position enclenchée ou déclenchée du verrou, et un deuxième interrupteur de fin de course lequel est déclenché par l'action des forces antagonistes du vérin sous pression, de la réaction du galet de verrouillage sur l'ensouple, et de la force du ressort de rappel associé au point d'accrochage.

Selon une autre caractéristique de l'invention, chaque palier comporte au moins un galet de centrage à butée latérale coopérant avec la partie frontale correspondante de l'ensouple pour garantir un effet de centrage axial lors de la rotation.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:

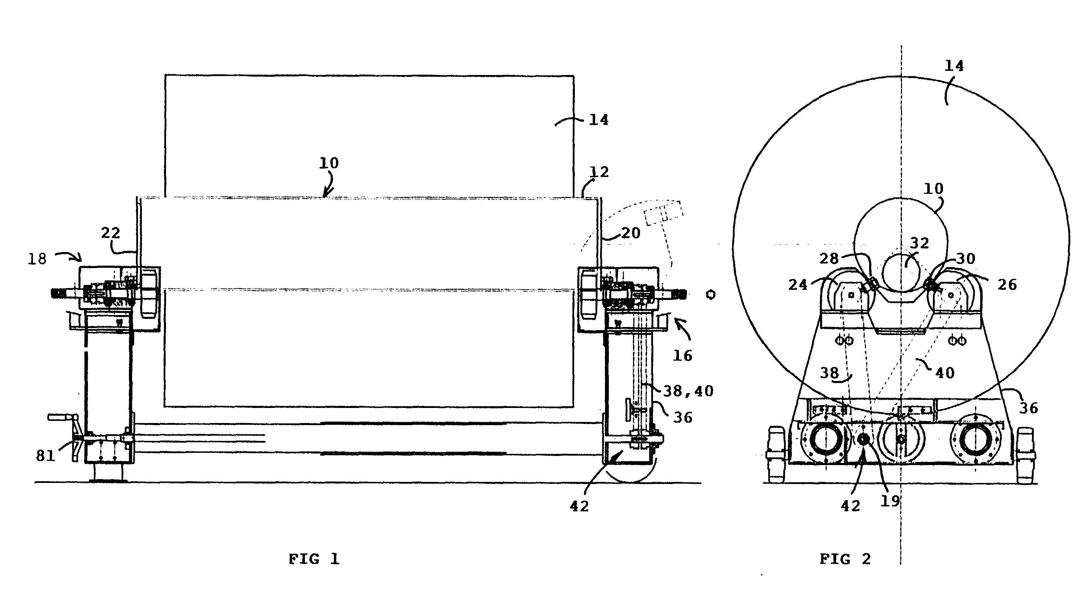

- La figure 1 est une vue schématique en élévation du dispositif enrouleur et dérouleur d'ensouple équipée de deux paliers de verrouillage selon l'invention.
- La figure 2 est une vue de profil de la figure 1.

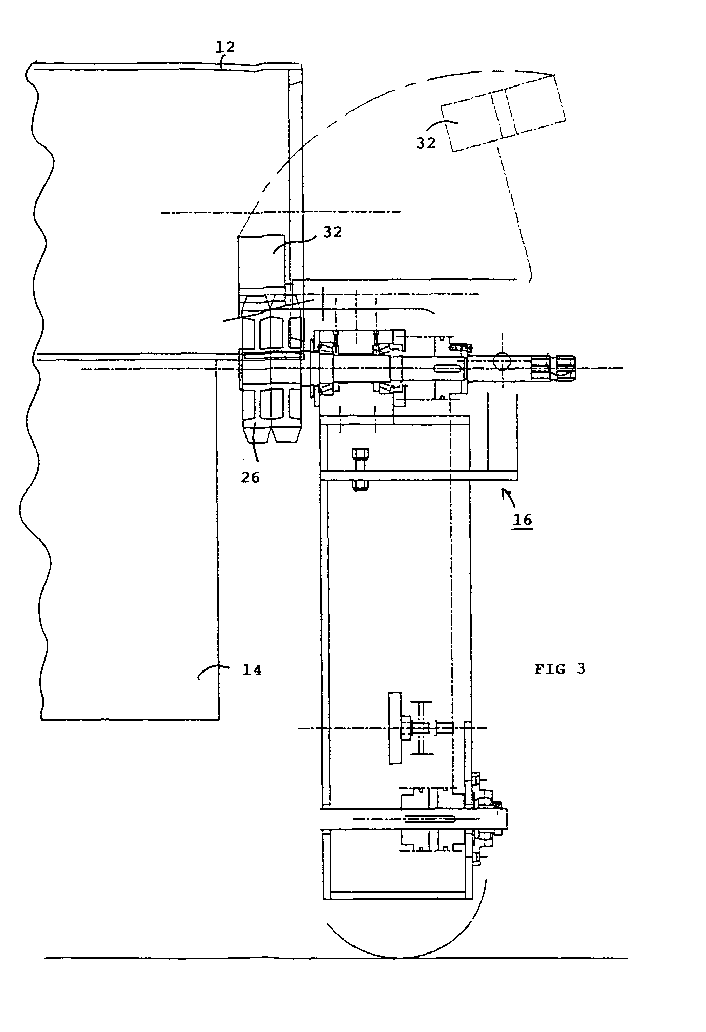

- La figure 3 montre une vue à échelle agrandie du palier de droite de la figure 1.
- La figure 4 représente l'équipage mobile du galet de verrouillage en position de blocage.
- La figure 5 est une vue identique de la figure 4, représentant le galet de verrouillage dans différentes positions, à savoir une position R de déblocage (en traits continus), une position intermédiaire I de libération du verrou ( en traits mixtes), et la position A de blocage.

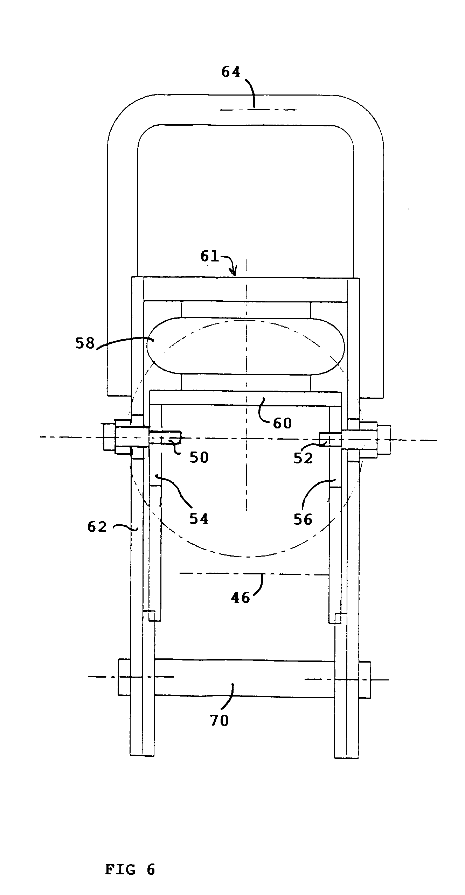

- La figure 6 est une vue transversale à échelle agrandie du verrou de la figure 4.

### Description d'un mode de réalisation préférentiel

En référence aux figures, l'ensouple 10 est constituée par un tambour ou rouleau 12 cylindrique creux sur lequel s'enroule ou se déroule le tissu 14. La surface latérale du tambour 12 est percée par une pluralité d'orifices pour le passage du liquide de teinture. Le tambour 12 allongé repose horizontalement sur deux paliers 16, 18 à verrouillage, disposés le long de la direction longitudinale du côté des deux fonds ouverts 20, 22 opposés. Les deux paliers 16, 18 sont identiques, et seul le palier 16 de droite sera décrit en détail par la suite.

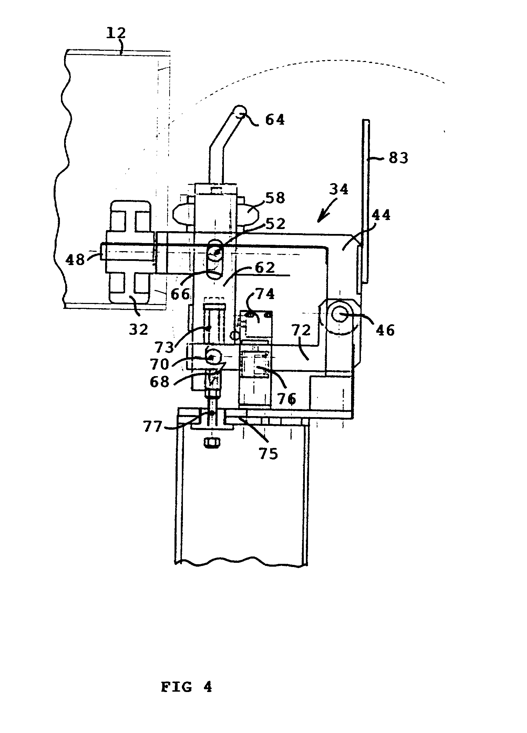

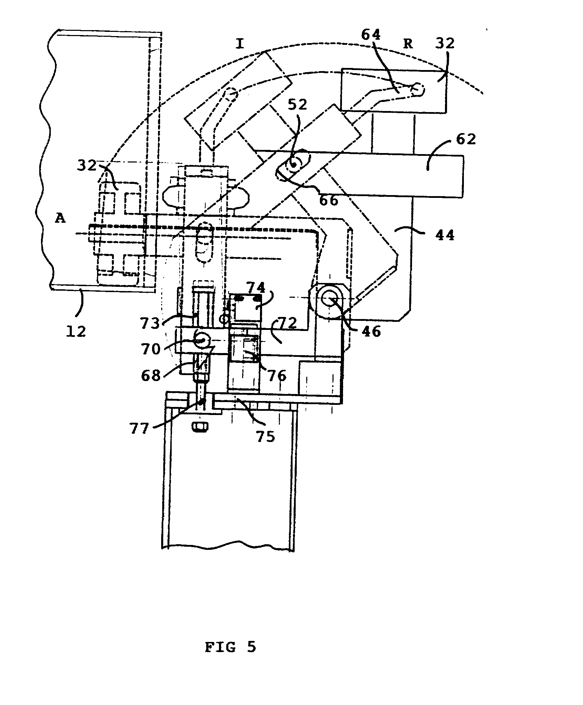

Le palier 16 à verrouillage comporte deux galets d'entraînement 24, 26 moteurs ou à freinage, deux galets de centrage 28, 30 à butée latérale, et un galet de verrouillage 32 monté sur un équipage mobile 34 entre une position de blocage (figure 4) et une position de déblocage (figure 5).

Les deux galets d'entraînement 24, 26 sont agencés à la partie inférieure du palier 16 en prenant appui tangentiellement sur la surface extérieure de l'ensouple 10 en deux points disposés symétriquement par rapport au plan vertical médian. Le segment angulaire compris entre les deux points d'appui correspond sensiblement à un angle droit. Les deux galets d'entraînement 24, 26 sont portés par un châssis fixe 36, et sont entraînés en rotation par des courroies ou chaînes de transmission 38, 40 d'un mécanisme de commande 42.

Afin d'assurer une maîtrise parfaite sans glissement de l'ensouple 10, notamment en présence de forts balourds, une liaison mécanique 19 est installée entre les deux paliers 16, 18 pour que les galets d'entraînements 24, 26 respectifs des deux paliers 16, 18 soient entraînés simultanément et en synchronisme.

Les deux galets de centrage 28, 30 à butée latérale coopèrent avec la partie frontale de l'ensouple 10 pour garantir le centrage axial de l'ensouple 10 entre les deux paliers 16, 18.

L'équipage mobile 34 du galet de verrouillage 32 comporte un bras d'actionnement 44 monté à pivotement autour d'un axe 46 entre lesdites positions de blocage et de déblocage. L'extrémité du bras 44 à l'opposé de l'axe 46 est dotée d'une fusée 48 de support du galet de verrouillage 32. La section transversale du bras 44 est conformée en U, et est munie d'une paire de tourillons 50, 52 alignés portés par les deux ailes 54, 56 parallèles.

Un vérin 58 pneumatique à soufflet gonflable est assujetti à l'âme 60 du bras 44, et se trouve en liaison avec un verrou 61 comprenant un levier de manoeuvre 62 en forme de U et surmonté d'une poignée de préhension 64 manuelle. Les deux ailes du levier de manoeuvre 62 comportent des lumières 66 oblongues coopérant avec les tourillons 50, 52 du bras d'actionnement 44 pour conférer au verrou 61 un mouvement de déplacement à deux degrés de liberté, à savoir une translation le long des lumières 66, et une rotation autour de l'axe des tourillons 50, 52. L'extrémité du levier de manoeuvre 62 est équipée d'un crochet d'accrochage 68 destiné à s'enclencher ou se dégager d'une traverse 70 ou de tout autre moyen de butée solidaire du bras d'ancrage 72 pivotant autour de l'axe 46. Au repos, le bras d'ancrage 72 est maintenu en position basse par l'action d'un ressort 73, lequel est inséré entre l'extrémité du tirant de réglage 77 et le bras d'ancrage 72. L'ajustage en longueur du tirant de réglage 77 permet le tarage du ressort 73.
Des organes de sécurité comportent un premier interrupteur de fin de course 74 détectant la position enclenchée ou déclenchée du levier de manoeuvre du verrou 61. Un deuxième interrupteur de fin de course 76 solidaire du bâti 75, détecte le rappel vers le haut du bras d'ancrage 72 sous l'effet de gonflage du vérin 58 par de l'air comprimé, de l'appui du galet de verrouillage 32 sur l'ensouple 10, et de l'accrochage du verrou sur la traverse 70. Au repos, le deuxième interrupteur de fin de course 76 est maintenu dans l'état fermé par la pression du bras d'ancrage 72 sollicité en position basse par le ressort 73.

Les deux interrupteurs 74, 76 sont représentés avec une commande pneumatique, mais il est clair que leur actionnement peut intervenir par voie hydraulique ou électrique.

Une commande manuelle 81 permet d'ajuster l'écartement longitudinal entre les deux paliers 16, 18 en fonction de la largeur de l'ensouple 10.

Le fonctionnement du dispositif enrouleur et dérouleur d'ensouple à paliers de verrouillage 16, 18 selon l'invention, est le suivant:

Dans la position relevée R du bras d'actionnement 44 (figure 5, en traits continus), le galet de verrouillage 32 est dégagé de l'ensouple 10, et se trouve en position de déblocage suite à la libération du crochet d'accrochage 68. L'ensouple 10 peut alors être posée par l'opérateur sur les deux galets d'entraînement 24, 26, et dans l'intervalle entre les deux paires de galets de centrage 28, 30 des deux paliers 16, 18. Il suffit ensuite de pousser sur la poignée de préhension 64 pour provoquer le pivotement du bras d'actionnement 44 jusqu'à la venue en engagement du galet de verrouillage 32 contre la paroi intérieure cylindrique de l'ensouple 10, et entre les deux galets 24, 26 extérieurs. La figure 5 montre le bras d'actionnement dans la position intermédiaire I ( en traits mixtes)) où le crochet d'accrochage 68 s'approche de la traverse 70, et dans la position A ( en traits pointillés) de blocage du galet 32.

L'effet de déformation du vérin 58 souple et le montage à boutonnière du levier de manoeuvre 62 sur les tourillons 50, 52 autorisent un mouvement combiné en translation et en pivotement du verrou 61 permettant l'accrochage du crochet 68 sur la traverse 70. Le premier interrupteur de fin de course 74 change d'état, et délivre un ordre de validation à un circuit de commande pour autoriser l'émission d'air comprimé vers le vérin 58 dès que l'opérateur le souhaite. Le gonflement du vérin 58 provoque une double action de maintien du crochet d'accrochage 68 sur la traverse 70, et du galet de verrouillage 32 contre la face intérieure de l'ensouple 10 (figure 4). Il en résulte un verrouillage positif de l'ensemble, avec impossibilité de ramener le galet de verrouillage 32 vers la position de déblocage à l'extérieur de l'ensouple 10 ( figure 5).

La mise en pression du vérin 58, et la réaction du galet de verrouillage 32 sur l'ensouple 10 provoquent le déplacement du crochet 68 vers le haut avec compression du ressort 73. La course du bras d'ancrage 72 est suffisante pour faire passer le deuxième interrupteur 76 vers l'état ouvert de validation de la commande de rotation des galets d'entraînement 24, 26. En présence d'un faux-rond de l'ensouple 10, l'ensemble est libre de se déplacer vers le haut sans déclencher le deuxième interrupteur 76.

L'opérateur effectue la même manoeuvre avec l'autre palier 18. La mise en route du mécanisme 42 est alors possible pour l'entraînement en rotation de l'ensouple 10 par l'intermédiaire des galets inférieurs 24, 26. L'opérateur peut aussi bien commander un enroulage ou un déroulage de l'ensouple 10.

L'enlèvement de l'ensouple 10 du poste s'opère en sens inverse des opérations précédentes. L'opérateur arrête la rotation du mécanisme 42, et commande l'échappement de l'air du vérin 58. Le verrou 61 n'est plus verrouillé positivement, et peut être débloqué en tirant manuellement la poignée de préhension 64 vers l'arrière, en ramenant le bras d'actionnement 44 vers la position de la figure 5. Le galet de verrouillage 32 se trouve en position de déblocage à l'extérieur de l'ensouple 10, laquelle pourra ensuite être enlevée en toute sécurité.

Ce dispositif à galet de verrouillage 32 escamotable permet aussi bien l'introduction ou l'extraction de l'ensouple 10 du poste d'enroulage / déroulage. Le dispositif d'actionnement du galet de verrouillage 32 est agencé pour être pratique, rapide et intègre également des fonctions de sécurité grâce aux interrupteurs de fin de course 74, 76 vérifiant le blocage du verrou 61, la présence d'air dans le vérin 58, l'appui du galet de verrouillage 32 sur l'ensouple 10, et le rappel du verrou 61 vers le haut. Il en résulte de ce concept une possibilité de standardisation du matériel, et une économie de temps étant donné que l'ensouple 10 pourra rester sur le même chariot, lequel servira aussi bien pour l'enroulage et le déroulage. La flexibilité du galet de verrouillage 32 permet de faire tourner des ensouples accusant des faux-ronds importants aux extrémités, et sans risque d'éjection intempestif. La flexibilité du galet de verrouillage 32 permet d'obtenir une mécanique fiable, qui ne sera pas soumise à des contraintes mécaniques dangereuses du fait de faux ronds importants sur les extrémités de l'ensouple 10, comme c'est le cas dans les systèmes dépourvus de souplesse géométrique. La sécurité du personnel est optimum, toute anomalie (manque d'air, mauvais positionnement du verrou 61) étant détectée automatiquement avec arrêt immédiat du mécanisme 42.

Une tige 83 additionnelle peut être associée au bras d'actionnement 44 pour faciliter les manoeuvres du galet de verrouillage 32 entre les positions de blocage et de déblocage.

## Revendications

1. Dispositif enrouleur et dérouleur d'ensouple, notamment pour la teinture de roules, et comprenant :
- un tambour (12) cylindrique creux monté à rotation dans deux paliers (16, 18) d'extrémités, et ayant une surface latérale percée par une pluralité d'orifices pour le passage d'un liquide de teinture,
- et des moyens de positionnement radial et d'entraînement en rotation de l'ensouple (10) au niveau de chaque palier (16, 18),
caractérisé en ce que chaque palier (16, 18) comporte :
- deux galets d'entraînement (24, 26) solidaires d'un châssis (36) fixe, et prenant appui tangentiellement sur la surface extérieure de l'ensouple (10) en deux points disposés à la partie inférieure symétriquement par rapport au plan vertical médian,
- un galet de verrouillage (32) porté par un bras d'actionnement (44) pivotant autour d'un axe (46) entre une position relevée de déblocage située à l'extérieur de l'ensouple (10), et une position abaissée de blocage provoquant la venue en engagement du galet de verrouillage (32) contre une zone de la paroi intérieure de l'enveloppe (10), ménagée entre les deux galets d'entraînement (24, 26),
- et des moyens de retenue associés au bras d'actionnement (44) pour inhiber le déplacement du galet de verrouillage (32) vers la position relevée de déblocage lors de la rotation de l'ensouple (10).

2. Dispositif enrouleur et dérouleur d'ensouple selon la revendication 1, caractérisé en ce que les moyens de retenue comportent un verrou (61) ayant un levier de manoeuvre (62) associé au bras d'actionnement (44), et comprenant un crochet d'accrochage (68) destiné à s'enclencher sur des moyens de butée (70) dans ladite position de blocage du galet de verrouillage (32).

3. Dispositif enrouleur et dérouleur d'ensouple selon la revendication 2, caractérisé en ce que les moyens de retenue comportent de plus un vérin (58) coopérant avec le bras d'actionnement (44) pour verrouiller positivement le crochet d'accrochage (68) sur les moyens de butée (70), et le galet de verrouillage (32) en position de blocage contre la face intérieure de l'ensouple (10).

4. Dispositif enrouleur et dérouleur d'ensouple selon la revendication 3, caractérisé en ce que le vérin (58) est un vérin pneumatique formé par un soufflet gonflable par de l'air comprimé.

5. Dispositif enrouleur et dérouleur d'ensouple selon la revendication 2 ou 3, caractérisé en ce que le levier de manoeuvre (62) est doté au moins d'un tourillon (50, 52) logé dans une lumière (66) oblongue du levier de manoeuvre (62) pour conférer au verrou (61) un mouvement de déplacement à deux degré de liberté en translation et en rotation, autorisant l'enclenchement et le dégagement du crochet d'accrochage (68) par rapport aux moyens de butée (70).

6. Dispositif enrouleur et dérouleur d'ensouple selon la revendication 3, caractérisé en ce que les organes de sécurité comportent un premier interrupteur de fin de course (74) détectant la position enclenchée ou déclenchée du verrou (61), et un deuxième interrupteur de fin de course (76) contrôlant à la fois la mise en pression du vérin (58), la réaction du galet de verrouillage (32) sur la face intérieure de l'ensouple (10), et l'accrochage du verrou (61) sur les moyens de butée (70).

7. Dispositif enrouleur et dérouleur d'ensouple selon la revendication 6, caractérisé en ce que les galets d'entraînement (24, 26) sont accouplés par des moyens de transmission (38, 40) à un mécanisme de commande (42) destiné à entraîner l'ensouple (10) en rotation après émission d'un ordre de validation par les organes de sécurité, respectivement lorsque le verrou (61) est enclenché, et le galet de verrouillage (32) se trouve en appui ferme sur l'ensouple (10).

8. Dispositif enrouleur et dérouleur d'ensouple selon la revendication 2, caractérisé en ce que le verrou (61) est pourvu d'une poignée de préhension (64) pour le déplacement du galet de verrouillage (32) entre les positions de blocage et de déblocage.

9. Dispositif enrouleur et dérouleur d'ensouple selon la revendication 1, caractérisé en ce que la zone d'engagement du galet de verrouillage (32) contre la paroi intérieure de l'ensouple (10) se trouve dans le plan vertical médian du palier (16, 18), et que les galets d'entraînement (24, 26) des deux paliers (16, 18) sont interconnectés en synchronisme par une liaison mécanique (19).

10. Dispositif enrouleur et dérouleur d'ensouple selon la revendication 1, caractérisé en ce que chaque palier (16, 18) comporte au moins un galet de centrage (28, 30) à butée latérale coopérant avec la partie frontale correspondante de l'ensouple (10) pour garantir un effet de centrage axial lors de la rotation.
